(19) **Europäisches Patentamt / European Patent Office / Office européen des brevets**

(11) **EP 2 963 961 A1**

(12) **EUROPEAN PATENT APPLICATION**
published in accordance with Art. 153(4) EPC

(43) Date of publication:
06.01.2016 Bulletin 2016/01

(51) Int Cl.:
*H04W 16/10* (2009.01)

(21) Application number: 13881211.0

(22) Date of filing: 02.04.2013

(86) International application number:
PCT/CN2013/073634

(87) International publication number:
WO 2014/161150 (09.10.2014 Gazette 2014/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• WU, Huifang
Shenzhen
Guangdong 518129 (CN)

• FENG, Li
Shenzhen
Guangdong 518129 (CN)
• MA, Xueli
Shenzhen
Guangdong 518129 (CN)
• ZHENG, Xiaoxiao
Shenzhen
Guangdong 518129 (CN)

(74) Representative: Lord, Michael
Gill Jennings & Every LLP
The Broadgate Tower
20 Primrose Street
London EC2A 2ES (GB)

(54) **METHOD AND APPARATUS FOR TRANSMITTING DEDICATED CHANNEL**

(57) The present invention relates to a dedicated channel transmission method and apparatus, where the method includes: when a dedicated physical control channel DPCCH discontinuous transmission mode of user equipment UE is activated, if a dedicated physical data channel DPDCH is configured and the UE has to-be-transmitted data, starting, by the UE, transmission of the DPDCH when a transmission period of a DPCCH starts, where the DPDCH carries the to-be-transmitted data. This avoids the DPCCH from remaining in a continuous transmission state when no data is to be transmitted, thereby resolving a problem of serious power waste and interference resulting from continuous sending of the DPCCH in an existing DCH service; this also avoids a power waste problem further caused by a continuous reception state of a receive end, thereby reducing transmit power of UE, and reducing power consumption and interference brought about by a dedicated channel.

> When a DPCCH discontinuous transmission mode of UE is activated, if a DPDCH is configured and the UE has to-be-transmitted data, the UE starts transmission of the DPDCH when a transmission period of a DPCCH starts, where the DPDCH carries the to-be-transmitted data

11

FIG. 1

**Description**

**TECHNICAL FIELD**

The present invention relates to wireless communications technologies, and in particular, to a dedicated channel transmission method and apparatus.

**BACKGROUND**

With the rapid development of a High Speed Packet Access (High Speed Packet Access, HSPA) technology, many services are carried on an HSPA network, and only some services that impose a relatively high requirement for reliability are carried on a dedicated channel (Dedicated Channel, DCH), for example, signaling radio bearer (Signaling Radio Bearer, SRB) information.

At present, once a dedicated channel is configured, a dedicated physical control channel (Dedicated physical Control Channel, DPCCH) is always in a continuous transmission and reception state, no matter whether there is data sent on the DCH. However, the services that impose a relatively high requirement for reliability do not exist all the time, but exist discontinuously, and a sending frequency (probability) of the services is very low. If the DPCCH is continuously sent due to the services that exist discontinuously, serious power waste and interference are caused when there is no data to be transmitted.

**SUMMARY**

In view of this, embodiments of the present invention provide a dedicated channel transmission method and apparatus, so as to reduce transmission power consumption and interference of a dedicated channel.

According to a first aspect, an embodiment of the present invention provides a dedicated channel transmission method, including:

when a dedicated physical control channel DPCCH discontinuous transmission mode of user equipment UE is activated, if a dedicated physical data channel DPDCH is configured and the UE has to-be-transmitted data, starting, by the UE, transmission of the DPDCH when a transmission period of a DPCCH starts, where the DPDCH carries the to-be-transmitted data.

With reference to the first aspect, in a first possible implementation manner of the first aspect, that when a dedicated physical control channel DPCCH discontinuous transmission mode of user equipment UE is activated includes that: when the DPCCH discontinuous transmission mode of the UE is activated according to a preset transmission pattern.

With reference to the first possible implementation manner of the first aspect, in a second possible implementation manner of the first aspect, the method further includes: if the user equipment UE does not have to-be-transmitted data, discontinuously transmitting, by the UE, the DPCCH according to the preset transmission pattern.

With reference to the second possible implementation manner of the first aspect, in a third possible implementation manner of the first aspect, the preset transmission pattern includes a data transmission section UE_DPCCH_burst_1 and a non-data transmission section gap; and the discontinuously transmitting, by the UE, the DPCCH according to the preset transmission pattern includes:

transmitting, by the UE, the DPCCH in the section UE_DPCCH_burst_1, and stopping transmission of the DPCCH in the section gap.

With reference to the third possible implementation manner of the first aspect, in a fourth possible implementation manner of the first aspect, a cycle length UE_DTX_cycle_1 of the preset transmission pattern is a length of one subframe multiplied by an integral multiple of 5, and a length of the UE_DPCCH_burst_1 is a length of one subframe multiplied by an integral multiple of 5.

With reference to the fourth possible implementation manner of the first aspect, in a fifth possible implementation manner of the first aspect, one subframe includes three timeslots, and five subframes constitute one frame.

With reference to the fourth possible implementation manner of the first aspect, in a sixth possible implementation manner of the first aspect, a connection frame number CFN of the first frame in the UE_DPCCH_burst_1 meets the following formula:

$$(5 \times CFN\text{-}UE\_DTX\_DRX\_Offset+S) \; MOD \; UE\_DTX\_cycle\_1=0,$$

where

UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

With reference to the fifth possible implementation manner of the first aspect, in a seventh possible implementation manner of the first aspect, the method further includes: if the UE has to-be-transmitted data, transmitting, by the UE in the transmission period of the DPCCH, the DPDCH that carries the to-be-transmitted data, and stopping transmission of the DPDCH in a non-transmission period of the DPCCH.

With reference to the first aspect or any possible implementation manner of the first to the seventh possible implementation manners of the first aspect, in an eighth possible implementation manner of the first aspect, if the UE does not finish transmission of the to-be-transmitted data in the transmission period of the DPCCH, the method further includes:

transmitting, by the UE, instruction information in a current transmission time interval TTI, where the instruction information is used to instruct to transmit the DPDCH in a next TTI of the DPCCH; and
continuing to transmit, by the UE in the next TTI according to the instruction information, the DPCCH and the DPDCH that carries remaining data of the to-be-transmitted data.

With reference to the eighth possible implementation manner of the first aspect, in a ninth possible implementation manner of the first aspect, the transmitting, by the UE, instruction information in a current TTI includes:

transmitting, by the UE in the current TTI, the instruction information by transmitting the DPDCH that carries the instruction information;
or includes:

transmitting, by the UE in the current TTI, the instruction information by transmitting the DPCCH that carries the instruction information.

With reference to the ninth possible implementation manner of the first aspect, in a tenth possible implementation manner of the first aspect, the instruction information is carried in one timeslot, or continuously and repeatedly carried in multiple timeslots.

With reference to the first aspect or any possible implementation manner of the first to the tenth possible implementation manners of the first aspect, in an eleventh possible implementation manner of the first aspect, the transmission pattern for DPCCH discontinuous transmission of the UE is the same as a transmission pattern for DPCCH discontinuous transmission of a base station that activates the DPCCH discontinuous transmission mode.

According to a second aspect, an embodiment of the present invention provides a dedicated channel transmission method, including:

activating, by a base station, a dedicated physical control channel DPCCH discontinuous transmission mode; and
if a dedicated physical data channel DPDCH is configured and the base station has to-be-transmitted data, starting, by the base station, transmission of the DPDCH when a transmission period of a DPCCH starts, where the DPDCH carries the to-be-transmitted data.

With reference to the second aspect, in a first possible implementation manner of the second aspect, the activating, by a base station, a dedicated physical control channel DPCCH discontinuous transmission mode includes: activating, by the base station, the DPCCH discontinuous transmission mode according to a preset transmission pattern.

With reference to the first possible implementation manner of the second aspect, in a second possible implementation manner of the second aspect, the method further includes: if the base station does not have to-be-transmitted data, discontinuously transmitting, by the base station, the DPCCH according to the preset transmission pattern.

With reference to the second possible implementation manner of the second aspect, in a third possible implementation manner of the second aspect, the preset transmission pattern includes a data transmission section UE_DPCCH_burst_1 and a non-data transmission section gap; and the discontinuously transmitting, by the base station, the DPCCH according to the preset transmission pattern includes:

transmitting, by the base station, the DPCCH in the section UE_DPCCH_burst_1, and stopping transmission of the DPCCH in the section gap.

With reference to the second possible implementation manner of the second aspect, in a fourth possible implementation manner of the second aspect, a cycle length UE_DTX_cycle_1 of the preset transmission pattern is a length of one subframe multiplied by an integral multiple of 5, and a length of the UE_DPCCH_burst_1 is a length of one subframe multiplied by an integral multiple of 5.

With reference to the fourth possible implementation manner of the second aspect, in a fifth possible implementation manner of the second aspect, one subframe includes three timeslots, and five subframes constitute one frame.

With reference to the fourth possible implementation manner of the second aspect, in a sixth possible implementation manner of the second aspect, a connection frame number CFN of the first frame in the UE_DPCCH_burst_1 meets the following formula:

$$(5 \times CFN\text{-}UE\_DTX\_DRX\_Offset+S) \text{ MOD } UE\_DTX\_cycle\_1=0,$$

where

UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

With reference to the second aspect or any possible implementation manner of the first to the sixth possible implementation manners of the second aspect, in a seventh possible implementation manner of the second aspect, the method further includes: if the base station has to-be-transmitted data, transmitting, by the base station in the transmission period of the DPCCH, the DPDCH that carries the to-be-transmitted data, and stopping transmission of the DPDCH in a non-transmission period of the DPCCH.

With reference to the second aspect or any possible implementation manner of the first to the seventh possible implementation manners of the second aspect, in an eighth possible implementation manner of the second aspect, if the base station does not finish transmission of the to-be-transmitted data in the transmission period of the DPCCH, the method further includes:

transmitting, by the base station, instruction information in a current transmission time interval TTI, where the instruction information is used to instruct to transmit the DPDCH in a next TTI of the DPCCH; and continuing to transmit, by the base station in the next TTI according to the instruction information, the DPCCH and the DPDCH that carries remaining data of the to-be-transmitted data.

With reference to the eighth possible implementation manner of the second aspect, in a ninth possible implementation manner of the second aspect, the transmitting, by the base station, instruction information in a current TTI includes:

transmitting, by the base station in the current TTI, the instruction information by transmitting the DPDCH that carries the instruction information; or includes:

transmitting, by the base station in the current TTI, the instruction information by transmitting the DPCCH that carries the instruction information.

With reference to the ninth possible implementation manner of the second aspect, in a tenth possible implementation manner of the second aspect, the instruction information is carried in one timeslot, or continuously and repeatedly carried in multiple timeslots.

With reference to the second aspect or any possible implementation manner of the first to the tenth possible implementation manners of the second aspect, in an eleventh possible implementation manner of the second aspect, the transmission pattern for DPCCH discontinuous transmission of the base station is the same as a transmission pattern of user equipment UE that receives the DPDCH.

With reference to any possible implementation manner of the first to the eleventh possible implementation manners of the second aspect, in a twelfth possible implementation manner of the second aspect, the activating, by a base station, a dedicated physical control channel DPCCH discontinuous transmission mode includes: activating, by the base station, the DPCCH discontinuous transmission mode according to a transmission pattern set by a radio network controller.

According to a third aspect, an embodiment of the present invention provides a dedicated channel transmission apparatus, including:

a transmitting module, configured to transmit a dedicated physical data channel DPDCH; and

a control module, configured to: when a dedicated physical control channel DPCCH discontinuous transmission mode of the apparatus is activated, if the DPDCH is configured and the apparatus has to-be-transmitted data, control the transmitting module to start transmission of the DPDCH when a transmission period of a DPCCH starts, where the DPDCH carries the to-be-transmitted data.

With reference to the third aspect, in a first possible implementation manner of the third aspect, the control module is specifically configured to: when the DPCCH discontinuous transmission mode of the apparatus is activated according to a preset transmission pattern, if the DPDCH is configured and the apparatus has to-be-transmitted data, control the transmitting module to start transmission of the DPDCH when the transmission period of the DPCCH starts, where the DPDCH carries the to-be-transmitted data.

With reference to the first possible implementation manner of the third aspect, in a second possible implementation manner of the third aspect, the control module is further configured to: if the apparatus does not have to-be-transmitted data, control the transmitting module to discontinuously transmit, according to the preset transmission pattern, the DPCCH.

With reference to the second possible implementation manner of the third aspect, in a third possible implementation manner of the third aspect, the preset transmission pattern, according to which the transmitting module discontinuously transmits the DPCCH, includes a data transmission section UE_DPCCH_burst_1 and a non-data transmission section gap; where
the transmitting module is specifically configured to:

transmit the DPCCH in the section UE_DPCCH_burst_1, and stop transmission of the DPCCH in the section gap.

With reference to the third possible implementation manner of the third aspect, in a fourth possible implementation manner of the third aspect, a cycle length UE_DTX_cycle_1 of the preset transmission pattern, according to which the transmitting module discontinuously transmits the DPCCH, is a length of one subframe multiplied by an integral multiple of 5, and a length of the UE_DPCCH_burst_1 is a length of one subframe multiplied by an integral multiple of 5.

With reference to the fourth possible implementation manner of the third aspect, in a fifth possible implementation manner of the third aspect, in the preset transmission pattern, according to which the transmitting module discontinuously transmits the DPCCH, one subframe includes three timeslots, and five subframes constitute one frame.

With reference to the fourth possible implementation manner of the third aspect, in a sixth possible implementation manner of the third aspect, in the preset transmission pattern, according to which the transmitting module discontinuously transmits the DPCCH,
a connection frame number CFN of the first frame in the UE_DPCCH_burst_1 meets the following formula:

$$(5 \times CFN - UE\_DTX\_DRX\_Offset + S) \bmod UE\_DTX\_cycle\_1 = 0,$$

where

UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

With reference to the third aspect or any possible implementation manner of the first to the sixth possible implementation manners of the third aspect, in a seventh possible implementation manner of the third aspect, the control module is further configured to: if the apparatus has to-be-transmitted data, control the transmitting module to transmit, in the transmission period of the DPCCH, the DPDCH that carries the to-be-transmitted data, and stop transmission of the DPDCH in a non-transmission period of the DPCCH.

With reference to the third aspect or any possible implementation manner of the first to the seventh possible implementation manners of the third aspect, in an eighth possible implementation manner of the third aspect, if the transmitting module does not finish transmission of the to-be-transmitted data in the transmission period of the DPCCH, the apparatus further includes:

an instructing module, configured to transmit instruction information in a current transmission time interval TTI, where the instruction information is used to instruct to transmit the DPDCH in a next TTI of the DPCCH; where the control module is further configured to control, according to the instruction information, the transmitting module to continue to transmit, in the next TTI, the DPCCH and the DPDCH that carries remaining data of the to-be-transmitted data.

With reference to the eighth possible implementation manner of the third aspect, in a ninth possible implementation manner of the third aspect, the instructing module is specifically configured to:

transmit, in the current TTI, the instruction information by transmitting the DPDCH that carries the instruction information;
or specifically configured to:

transmit, in the current TTI, the instruction information by transmitting the DPCCH that carries the instruction information.

With reference to the ninth possible implementation manner of the third aspect, in a tenth possible implementation manner of the third aspect, the instruction information transmitted by the instructing module is carried in one timeslot, or continuously and repeatedly carried in multiple timeslots.

With reference to the third aspect or any possible implementation manner of the first to the tenth possible implementation manners of the third aspect, in an eleventh possible implementation manner of the third aspect, the transmission pattern for DPCCH discontinuous transmission of the transmitting module is the same as a transmission pattern for DPCCH discontinuous transmission of a base station that activates the DPCCH discontinuous transmission mode.

According to a fourth aspect, an embodiment of the present invention provides a dedicated channel transmission apparatus, including:

an activating module, configured to activate a dedicated physical control channel DPCCH discontinuous transmission mode; and
a transmitting module, configured to: if a dedicated physical data channel DPDCH is configured and the apparatus has to-be-transmitted data, start transmission of the DPDCH when a transmission period of a DPCCH starts, where the DPDCH carries the to-be-transmitted data.

With reference to the fourth aspect, in a first possible implementation manner of the fourth aspect, the activating module is specifically configured to activate the DPCCH discontinuous transmission mode according to a preset transmission pattern.

With reference to the first possible implementation manner of the fourth aspect, in a second possible implementation manner of the fourth aspect, the transmitting module is further configured to: if the apparatus does not have to-be-transmitted data, discontinuously transmit the DPCCH according to the preset transmission pattern.

With reference to the second possible implementation manner of the fourth aspect, in a third possible implementation manner of the fourth aspect, the preset transmission pattern, according to which the transmitting module discontinuously transmits the DPCCH, includes a data transmission section UE_DPCCH_burst_1 and a non-data transmission section gap; and the transmitting module is specifically configured to:

transmit the DPCCH in the section UE_DPCCH_burst_1, and stop transmission of the DPCCH in the section gap.

With reference to the second possible implementation manner of the fourth aspect, in a fourth possible implementation manner of the fourth aspect, a cycle length UE_DTX_cycle_1 of the preset transmission pattern, according to which the transmitting module discontinuously transmits the DPCCH, is a length of one subframe multiplied by an integral multiple of 5, and a length of the UE_DPCCH_burst_1 is a length of one subframe multiplied by an integral multiple of 5.

With reference to the fourth possible implementation manner of the fourth aspect, in a fifth possible implementation manner of the fourth aspect, in the preset transmission pattern, according to which the transmitting module discontinuously transmits the DPCCH, one subframe includes three timeslots, and five subframes constitute one frame.

With reference to the fourth possible implementation manner of the fourth aspect, in a sixth possible implementation manner of the fourth aspect, in the preset transmission pattern according to which the transmitting module discontinuously transmits the DPCCH, a connection frame number CFN of the first frame in the UE_DPCCH_burst_1 meets the following formula:

$$(5 \times CFN-UE\_DTX\_DRX\_Offset+S) \ MOD \ UE\_DTX\_cycle\_1=0,$$

where

UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

With reference to the fourth aspect or any possible implementation manner of the first to the sixth possible implementation manners of the fourth aspect, in a seventh possible implementation manner of the fourth aspect, the transmitting module is further configured to: if the apparatus has to-be-transmitted data, transmit, in the transmission period of the DPCCH, the DPDCH that carries the to-be-transmitted data, and stop transmission of the DPDCH in a non-transmission period of the DPCCH.

With reference to the fourth aspect or any possible implementation manner of the first to the seventh possible implementation manners of the fourth aspect, in an eighth possible implementation manner of the fourth aspect, if the transmitting module does not finish transmission of the to-be-transmitted data in the transmission period of the DPCCH, the apparatus further includes:

an instructing module, configured to transmit instruction information in a current transmission time interval TTI, where the instruction information is used to instruct to transmit the DPDCH in a next TTI of the DPCCH; where the transmitting module is further configured to continue to transmit, in the next TTI according to the instruction information transmitted by the instructing module, the DPCCH and the DPDCH that carries remaining data of the to-be-transmitted data.

With reference to the eighth possible implementation manner of the fourth aspect, in a ninth possible implementation manner of the fourth aspect, the instructing module is specifically configured to:

transmit, in the current TTI, the instruction information by transmitting the DPDCH that carries the instruction information;

or specifically configured to:

transmit, in the current TTI, the instruction information by transmitting the DPCCH that carries the instruction information.

With reference to the ninth possible implementation manner of the fourth aspect, in a tenth possible implementation manner of the fourth aspect, the instruction information transmitted by the instructing module is carried in one timeslot, or continuously and repeatedly carried in multiple timeslots.

With reference to the fourth aspect or any possible implementation manner of the first to the tenth possible implementation manners of the fourth aspect, in an eleventh possible implementation manner of the fourth aspect, the transmission pattern for DPCCH discontinuous transmission of the transmitting module is the same as a transmission pattern of user equipment UE that receives the DPDCH.

With reference to the first to the eleventh possible implementation manners of the fourth aspect, in a twelfth possible implementation manner of the fourth aspect, the transmitting module is specifically configured to activate the DPCCH discontinuous transmission mode according to a transmission pattern set by a radio network controller.

According to a fifth aspect, an embodiment of the present invention provides a computer program product, including a computer-readable medium, where the readable medium includes a set of program code that is used to execute the dedicated channel transmission method according to either of the first aspect and the second aspect.

According to the dedicated channel transmission method and apparatus provided in the foregoing solutions, in a case in which a DPDCH is configured, if there is no to-be-transmitted data, a DPCCH is discontinuously transmitted according to a preset transmission pattern; if there is to-be-transmitted data, transmission of the DPDCH starts only in a transmission period of the DPCCH, where the DPDCH carries the to-be-transmitted data. This avoids the DPCCH from remaining in a continuous transmission state when no data is to be transmitted, thereby resolving a problem of serious power waste and interference resulting from continuous sending of the DPCCH in an existing DCH service; this also avoids a power waste problem further caused by a continuous reception state of a receive end, thereby reducing transmit power of UE, and reducing power consumption and interference brought about by a dedicated channel.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of a dedicated channel transmission method according to an embodiment of the present invention;
FIG. 2 is a schematic diagram of a dedicated channel transmission method according to an embodiment of the present invention;
FIG. 3 is a schematic diagram of information transmission in a dedicated channel transmission method according to another embodiment of the present invention;
FIG. 4 is a schematic diagram of information transmission in a dedicated channel transmission method according to another embodiment of the present invention;
FIG. 5 is a schematic diagram of information transmission in a dedicated channel transmission method according to another embodiment of the present invention;
FIG. 6 is a schematic diagram of information transmission in a dedicated channel transmission method according to another embodiment of the present invention;
FIG. 7 is a schematic structural diagram of a dedicated channel transmission apparatus according to another embodiment of the present invention;
FIG. 8 is a schematic structural diagram of a dedicated channel transmission apparatus according to another embodiment of the present invention;
FIG. 9 is a schematic structural diagram of user equipment according to another embodiment of the present invention; and
FIG. 10 is a schematic structural diagram of a base station according to another embodiment of the present invention.

**DESCRIPTION OF EMBODIMENTS**

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

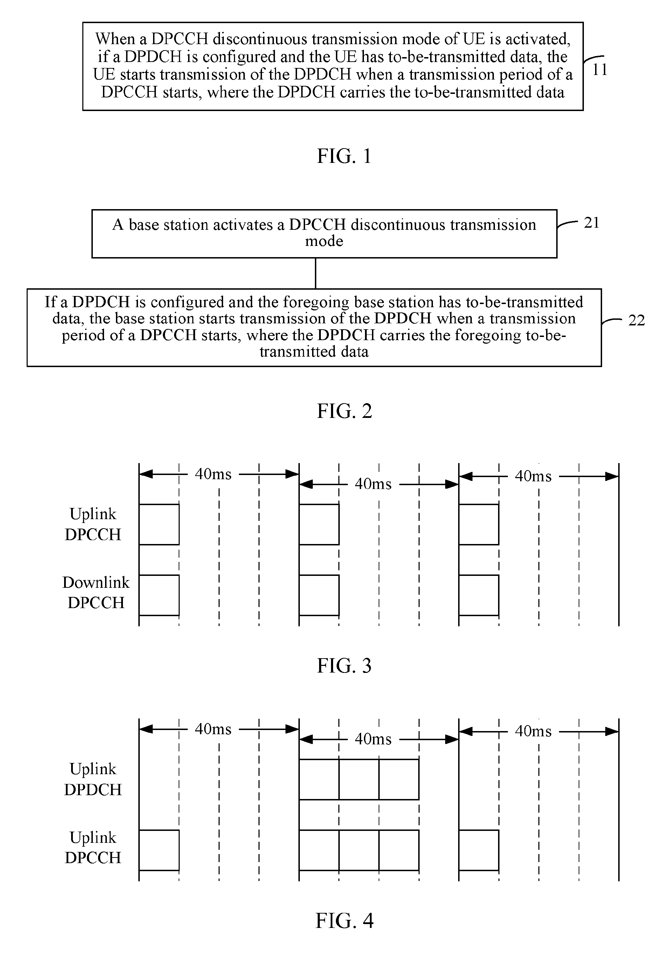

FIG. 1 is a schematic diagram of a dedicated channel transmission method according to an embodiment of the present invention. The method described in this embodiment is operated by a user equipment (User Equipment, UE) side and includes the following step:

11: When a DPCCH discontinuous transmission mode of UE is activated, if a dedicated physical data channel (Dedicated Physical Date Channel, DPDCH) is configured and the UE has to-be-transmitted data, the UE starts transmission of the DPDCH when a transmission period of a DPCCH starts, where the DPDCH carries the to-be-transmitted data.

The to-be-transmitted data may be to-be-received data, or may be to-be-sent data. Transmitting the DPCCH may be sending the DPCCH (an uplink DPCCH in this case), or may be receiving the DPCCH (a downlink DPCCH in this case). Transmitting the DPDCH may be sending the DPDCH, or may be receiving the DPDCH.

Further, that when a dedicated physical control channel DPCCH discontinuous transmission mode of UE is activated may include that: when the DPCCH discontinuous transmission mode of the UE is activated according to a preset transmission pattern.

Further, if the UE does not have to-be-transmitted data, the UE may discontinuously transmit the DPCCH according to the foregoing preset transmission pattern.

Further, the foregoing preset transmission pattern may include a data transmission section and a non-data transmission section, where the data transmission section includes UE_DPCCH_burst_1, UE_DPCCH_burst_2 or another similar data transmission section. For ease of description, the following uses only UE_DPCCH_burst_1 as an example for detailed description. gap is a non-transmission period of the DPCCH.

Further, that the UE discontinuously transmits the DPCCH according to the preset transmission pattern may include that:

the UE transmits the DPCCH in the foregoing section UE_DPCCH_burst_1, and stops transmission of the DPCCH in the foregoing section gap.

Further, a cycle length UE_DTX_cycle_1 of the foregoing preset transmission pattern is a length of one subframe multiplied by an integral multiple of 5, and a length of the UE_DPCCH_burst_1 is a length of one subframe multiplied by an integral multiple of 5.

Further, one subframe may include three timeslots, and five subframes constitute one frame; and a connection frame number CFN of the first frame in the foregoing UE_DPCCH_burst_1 meets the following formula:

$$(5 \times CFN - UE\_DTX\_DRX\_Offset + S) \bmod UE\_DTX\_cycle\_1 = 0,$$

where

UE_DTX_DRX_Offset is a quantity of offset subframes between an uplink DPCCH transmission pattern and a high speed shared control channel (High Speed Shared Control Channel, HS-SCCH) reception pattern, and the quantity of the offset subframes is an integral multiple of 5; and S is a subframe number of the DPCCH.

A transmission pattern may be classified into a sending pattern and a reception pattern, where the sending pattern is a sending sequence or structure used when a transmit end sends information, and the reception pattern is a reception sequence or structure used when a receive end receives information. In this embodiment, the UE may serve as a transmit end or a receive end. A sending pattern used when the UE serving as a transmit end sends an uplink DPCCH is the same as a reception pattern used when the UE serving as a receive end receives a downlink DPCCH. In addition, a reception pattern used by a peer base station serving as a receive end of the uplink DPCCH is the same as a sending pattern used when the base station serving as a transmit end sends the uplink DPCCH, and a sending pattern used by the peer base station serving as a transmit end of the downlink DPCCH is the same as a reception pattern used when the UE serving as a receive end receives the downlink DPCCH. In this way, discontinuous transmission (Discontinuous Transmission, DTX) and discontinuous reception (Discontinuous reception, DRX) gains can be utilized to the most extent; in addition, actions of a receive end and a transmit end are consistent, and the implementation is relatively simple.

Further, if the UE has to-be-transmitted data, the UE transmits, in the transmission period of the DPCCH, the DPDCH that carries the to-be-transmitted data, and stops transmission of the DPDCH in a non-transmission period of the DPCCH.

Further, if the UE does not finish transmission of the foregoing to-be-transmitted data in the transmission period of the DPCCH, the dedicated channel transmission method provided in this embodiment of the present invention may further include:

transmitting, by the UE, instruction information in a current transmission time interval (Transmission Time Interval, TTI), where the instruction information is used to instruct to transmit the DPDCH in a next TTI of the DPCCH; and continuing to transmit, by the UE in the next TTI according to the instruction information, the DPCCH and the DPDCH that carries remaining data of the foregoing to-be-transmitted data.

The transmitting, by the UE, instruction information in a current TTI includes: receiving the instruction information in the current TTI and sending the instruction information in the current TTI. When the UE receives the instruction information in the current TTI, the instruction information is used to instruct the UE to continue to receive the DPDCH in the next TTI of the DPCCH. When the UE sends the instruction information in the current TTI, the instruction information is not only used to instruct the peer base station to receive the DPDCH in the next TTI of the DPCCH, but also used to instruct the UE to send the DPDCH in the next TTI of the DPCCH.

Further, the transmitting, by the UE, instruction information in a current TTI may include:

transmitting, by the UE in the current TTI, the foregoing instruction information by transmitting the DPDCH that carries the foregoing instruction information;
or may include:

transmitting, by the UE in the current TTI, the foregoing instruction information by transmitting the DPCCH that carries the foregoing instruction information.

Further, the foregoing instruction information may be carried in one timeslot, or continuously and repeatedly carried in multiple timeslots. The foregoing instruction information may be carried in one or more timeslots of the DPDCH, or may be carried in one or more timeslots of the DPCCH.

In this embodiment, in a case in which a DPDCH is configured, if there is no to-be-transmitted data, a DPCCH is discontinuously transmitted according to a preset transmission pattern; if there is to-be-transmitted data, transmission of the DPDCH starts only in a transmission period of the DPCCH, where the DPDCH carries the to-be-transmitted data. This avoids the DPCCH from remaining in a continuous transmission state when no data is to be transmitted, thereby resolving a problem of serious power waste and interference resulting from continuous sending of the DPCCH in an existing DCH service; this also avoids a power waste problem further caused by a continuous reception state of a receive end, thereby reducing transmit power of UE, and reducing power consumption and interference brought about by a dedicated channel.

FIG. 2 is a schematic diagram of a dedicated channel transmission method according to an embodiment of the present invention. The method described in this embodiment is operated by a base station side and includes the following steps:

21: A base station activates a DPCCH discontinuous transmission mode.

22: If a DPDCH is configured and the foregoing base station has to-be-transmitted data, the base station starts transmission of the DPDCH when a transmission period of a DPCCH starts, where the DPDCH carries the foregoing to-be-transmitted data.

The to-be-transmitted data may be to-be-received data, or may be to-be-sent data. Transmitting the DPCCH may be sending the DPCCH, or may be receiving the DPCCH. Transmitting the DPDCH may be sending the DPDCH, or may be receiving the DPDCH.

Further, that a base station activates a DPCCH discontinuous transmission mode may include that: the base station activates the DPCCH discontinuous transmission mode according to a preset transmission pattern.

Further, if the base station does not have to-be-transmitted data, the base station discontinuously transmits the DPCCH according to the foregoing preset transmission pattern.

Further, the foregoing preset transmission pattern may include a data transmission section (UE_DPCCH_burst_1) and a non-data transmission section (gap), where
UE_DPCCH_burst_1 is a transmission period of the DPCCH, and gap is a non-transmission period of the DPCCH.

Further, that the base station discontinuously transmits the DPCCH according to the preset transmission pattern may include that:

the base station transmits the DPCCH in the section UE_DPCCH_burst_1, and stops transmission of the DPCCH in the section gap.

Further, a cycle length UE_DTX_cycle_1 of the foregoing preset transmission pattern may be a length of one subframe multiplied by an integral multiple of 5, and a length of the foregoing UE_DPCCH_burst_1 may be a length of one subframe multiplied by an integral multiple of 5.

Further, one subframe may include three timeslots, and five subframes constitute one frame.

Further, a connection frame number CFN of the first frame in the foregoing UE_DPCCH_burst_1 meets the following formula:

$$(5 \times CFN - UE\_DTX\_DRX\_Offset + S) \ MOD \ UE\_DTX\_cycle\_1 = 0,$$

where

UE_DTX_DRX_Offset is a quantity of offset subframes between an uplink DPCCH transmission pattern and an HS-SCCH reception pattern, and the quantity of the offset subframes is an integral multiple of 5; and S is a subframe number of the DPCCH.

A transmission pattern may be classified into a sending pattern and a reception pattern, where the sending pattern is a sending sequence or structure used when a transmit end sends information, and the reception pattern is a reception sequence or structure used when a receive end receives information. In this embodiment, the base station may serve as a transmit end or a receive end. A sending pattern used when the base station serving as a transmit end sends a downlink DPCCH is the same as a reception pattern used when the base station serving as a receive end receives an uplink DPCCH. In addition, a reception pattern used by a peer UE serving as a receive end of the downlink DPCCH is the same as a sending pattern used when the base station serving as a transmit end sends the downlink DPCCH, and a sending pattern used by the peer UE serving as a transmit end of the uplink DPCCH is the same as a reception pattern used when the base station serving as a receive end receives the uplink DPCCH. In this way, DTX and DRX gains can be utilized to the most extent; in addition, actions of a receive end and a transmit end are consistent, and the implementation is relatively simple.

Further, if the base station has to-be-transmitted data, the base station transmits, in the transmission period of the DPCCH, the DPDCH that carries the to-be-transmitted data, and stops transmission of the DPDCH in a non-transmission period of the DPCCH.

Further, if the base station does not finish transmission of the to-be-transmitted data in the transmission period of the DPCCH, the dedicated channel transmission method provided in this embodiment of the present invention may further include:

transmitting, by the base station, instruction information in a current TTI, where the instruction information is used to instruct to transmit the DPDCH in a next TTI of the DPCCH; and
transmitting, by the base station in the next TTI according to the instruction information, the DPCCH and the DPDCH that carries remaining data of the foregoing to-be-transmitted data.

The transmitting, by the base station, instruction information in a current TTI includes: receiving the instruction information in the current TTI and sending the instruction information in the current TTI. When the base station receives the instruction information in the current TTI, the instruction information is used to instruct the base station to continue to receive the DPDCH in the next TTI of the DPCCH. When the base station sends the instruction information in the current TTI, the instruction information is not only used to instruct the peer UE to receive the DPDCH in the next TTI of the DPCCH, but also used to instruct the base station to send the DPDCH in the next TTI of the DPCCH.

Further, the transmitting, by the base station, instruction information in a current TTI may include:

transmitting, by the base station in the current TTI, the foregoing instruction information by transmitting the DPDCH that carries the foregoing instruction information;
or may include:

transmitting, by the base station in the current TTI, the foregoing instruction information by transmitting the DPCCH that carries the foregoing instruction information.

Further, the foregoing instruction information may be carried in one timeslot, or continuously and repeatedly carried in multiple timeslots. The foregoing instruction information may be carried in one or more timeslots of the DPDCH, or may be carried in one or more timeslots of the DPCCH.

Further, that a base station activates a dedicated physical control channel DPCCH discontinuous transmission mode may include that: the base station activates the DPCCH discontinuous transmission mode according to a transmission pattern set by a radio network controller.

In a case in which a DPDCH is configured, if there is no to-be-transmitted data, a DPCCH is discontinuously transmitted according to a preset transmission pattern; if there is to-be-transmitted data, transmission of the DPDCH starts only in a transmission period of the DPCCH, where the DPDCH carries the to-be-transmitted data. This avoids the DPCCH from remaining in a continuous transmission state when no data is to be transmitted, thereby resolving a problem of serious power waste and interference resulting from continuous sending of the DPCCH in an existing DCH service; this also avoids a power waste problem further caused by a continuous reception state of a receive end, thereby reducing transmit power of UE and a base station, and reducing power consumption and interference brought about by a dedicated channel.

Another embodiment provided in the present invention is similar to the foregoing embodiment. A difference lies in that this embodiment introduces DTX and DRX to a DCH. With respect to the DCH, values of DTX and DRX feature parameters are integral multiples of 5, that is, these parameters are at a frame level, but values of these parameters in the prior art are at a subframe level. For a subframe, for example, a length of one subframe is defined as 2 ms, and one subframe includes three timeslots. One frame includes five subframes, and DTX and DRX feature parameters include UE_DTX_cycle_1, UE_DPCCH_burst_1, UE_DTX_DRX Offset, and the like.

The uplink DPCCH is used as an example. The foregoing UE_DTX_cycle_1 indicates a length or a cycle of an uplink DPCCH transmission pattern (burst pattern); UE_DPCCH_burst_1 indicates a length of an uplink DPCCH in each UE_DTX_cycle_1; and UE_DTX_DRX Offset indicates a quantity of offset subframes between the uplink DPCCH transmission pattern and an HS-SCCH reception pattern, and the quantity of offset subframes is an integral multiple of 5.

The UE_DPCCH_burst_1 of the uplink DPCCH may also be 10 ms or an integral multiple of 10 ms, so as to meet a requirement for transmitting a TFCI.

When the uplink DPCCH is sent or received, a frame number CFN of the first frame of the DPCCH in each UE_DTX_cycle_1 meets the following formula (1):

$$((5 \times CFN - UE\_DTX\_DRX\_Offset + S) \ MOD \ UE\_DTX\_cycle\_1) = 0 \ (1),$$

where

S is a start subframe number.

That is, when the uplink DPCCH is sent, in each UE_DTX_cycle_1, a CFN is obtained according to the formula (1), and a frame corresponding to the CFN is used as the first frame for sending the uplink DPCCH.

If the UE obtains the frame number of the first frame of the uplink DPCCH in each UE_DTX_cycle_1 and a length of gap, a transmission pattern of each UE_DTX_cycle_1 is obtained.

The UE sends the uplink DPCCH according to the transmission pattern of each UE_DTX_cycle_1.

Similarly, when receiving the uplink DPCCH, the base station also obtains the transmission pattern of each UE_DTX_cycle_1 according to the formula (1), and receives the uplink DPCCH according to the transmission pattern.

Sending and receiving a downlink DPCCH are similar to the foregoing sending and receiving the uplink DPCCH, and a difference lies in that: a transmit end of the uplink DPCCH is the UE and a receive end is the base station, but a transmit end of the downlink DPCCH is the base station and a receive end is the UE. In addition, a concept of subframe is introduced to the downlink DPCCH: a length of 2 ms is one subframe, where one subframe includes three timeslots, and one 10-ms frame includes five subframes.

FIG. 3 is a schematic diagram of information transmission in a dedicated channel transmission method according to another embodiment of the present invention. In this embodiment, cycles UE_DTX_cycle_1 of uplink and downlink DPCCH transmission patterns of a DCH are 40 ms, burst lengths UE_DPCCH_burst_1 of the uplink DPCCH and the downlink DPCCH are 10 ms, gap lengths of the uplink DPCCH and the downlink DPCCH are 30 ms, and each first frame of the DPCCH in each UE_DTX_cycle_1 is in the first frame in each UE_DTX_cycle_1.

On a UE side, sending the uplink DPCCH and receiving the downlink DPCCH are performed simultaneously in each UE_DTX_cycle_1, and a length of a transmission period UE_DPCCH_burst_1 in an uplink sending pattern entirely overlaps a length of a transmission period UE_DPCCH_burst_1 in a downlink reception pattern, that is, a period in which the UE sends the uplink DPCCH entirely overlaps a period in which the UE receives the downlink DPCCH. In addition, a gap length in the uplink sending pattern entirely overlaps a gap length in the downlink reception pattern, that is, a period in which the UE does not send the uplink DPCCH entirely overlaps a period in which the UE does not receive the downlink DPCCH. The downlink DPCCH is received only when the uplink DPCCH is sent. Otherwise, neither the uplink DPCCH is sent nor the DPCCH is received, so that the UE can be kept in a disconnected state on the DCH to the most extent. That is, a time during which the UE disables both uplink sending and downlink reception is maximized, thereby implementing energy and power saving to the maximum.

Another embodiment of the present invention provides a method of information transmission on a dedicated channel. Based on the foregoing embodiment, this embodiment further imposes a limitation on data sending.

The uplink and downlink DPDCHs need to be transmitted in the data transmission section UE_DPCCH_burst_1. If there is data in the non-data transmission section (gap) and the data needs to be transmitted through the DCH, the data can be sent through the DPDCH only in the data transmission section UE_DPCCH_burst_1 of the DPCCH. When the DPDCH is transmitted subsequently, the DPCCH needs to be transmitted all the time. Once data is interrupted, data retransmission needs to start in the data transmission section UE_DPCCH_burst_1 of the DPCCH. In this way, transmit power of the UE can be saved to a greater extent.

FIG. 4 is a schematic diagram of information transmission in a dedicated channel transmission method according to another embodiment of the present invention. Uplink sending is used as an example. In this embodiment, only an uplink DPCCH, but no uplink DPDCH, is sent within a length of UE_DPCCH_burst_1 in the first cycle UE_DTX_cycle_1. That is, no DPDCH data information is to be transmitted within the time UE_DPCCH_burst_1 in the first transmitting cycle of UE. If data arrives within the second 10 ms in the first transmitting cycle of the UE, but because no uplink DPCCH is sent within the second 10 ms to the fourth 10 ms, the DPDCH can be sent only when the uplink DPCCH is sent within the UE_DPCCH_burst_1 in the second cycle UE_DTX_cycle_1. In addition, because sending of DPDCH data is not finished within the length of the UE_DPCCH_burst_1, the DPDCH data can continue to be sent in the second frame and the third frame in the second sending cycle. Therefore, two frames of the DPCCH are sent continuously in the second frame and the third frame.

A method of information transmission on a dedicated channel provided in another embodiment of the present invention is similar to that in the foregoing embodiment, where a discontinuous sending pattern of an uplink DCH is exactly the same as a discontinuous reception pattern of a downlink DCH, and the uplink DCH and the downlink DCH respectively enter a DTX state and a DRX state at the same time. A difference lies in that: this embodiment further imposes a limitation on reliable data reception.

When the length of the UE_DPCCH_burst_1 is 10 ms, because the uplink DPCCH has a TFCI indicator, whether there is data being transmitted can be learnt from information in the transport format combination indicator (Transport Format Combination Indicator, TFCI). However, there may be no TFCI transmitted on the downlink DPCCH. When there is no TFCI transmitted, it is unreliable to determine, only by detecting signal strength of data, whether there is data being transmitted. This is because it is very likely that the signal strength of the data is not strong enough and the data cannot be detected even if there is data being transmitted. It is rather risky if subsequent data receiving is suspended for the reason that the data is sent but cannot be detected, for example, reliability of SRB information needs to be ensured. To avoid occurrence of such case, there may be the following two solutions:

One solution is: when discontinuous transmission and receiving are configured for DCH transmission, a downlink TFCI needs to be transmitted. The other solution is: a piece of indication information is added during a downlink data transmission process, where the indication information is used to inform the UE that there is downlink data being sent. After receiving the indication information, the UE needs to continuously receive downlink data. The indication information may be carried in one bit of the downlink DPCCH. To ensure reliability of the indication information, the one bit of the indication information may be continuously transmitted in multiple timeslots.

According to the information transmission in the dedicated channel transmission method provided in another embodiment of the present invention, to ensure consistency of transmission patterns and save transmit and receive power to the most extent, it is defined that a length of the UE_DTX_cycle_1 is a length of the TTI or an integral multiple of the TTI, and a service of at most one TTI is transmitted in one UE_DTX_cycle_1.

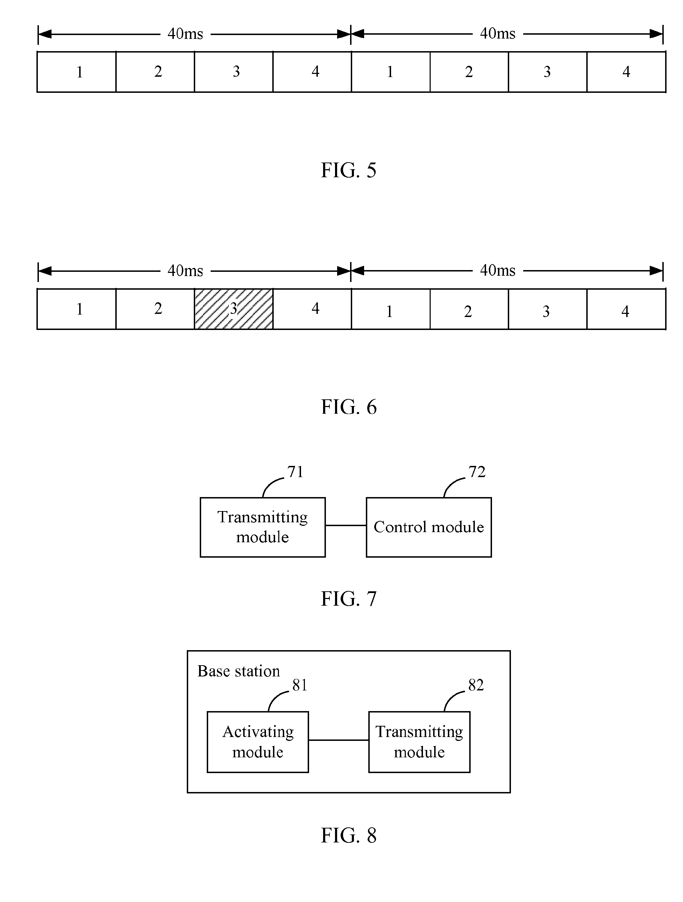

Referring to FIG. 5, the length of the UE_DTX_cycle_1 is 40 ms, the length of the UE_DPCCH_burst_1 is 10 ms, a block labeled as "1" indicates a location of the transmission period UE_DPCCH_burst_1, and locations labeled as "2", "3" and "4" are non-transmission periods gap. That a TTI length of data is 10 ms is used as an example. If it is detected that there is data transmitted (determined by using a TFCI) in the transmission period UE_DPCCH_burst_1 of the first transmission cycle, the data is transmitted only in the transmission period UE_DPCCH_burst_1 of this cycle. If transmission of the data is not finished in the transmission period UE_DPCCH_burst_1 of the first cycle, transmission of data that has not been transmitted needs to be finished in a transmission period UE_DPCCH_burst_1 of subsequent one or more transmission cycles, that is, data transmission cannot be performed during the non-transmission period gap of a cycle. In this way, power can be saved to the most extent, and design of the transmission pattern is simplified.

According to the information transmission in the dedicated channel transmission method provided in another embodiment of the present invention, the length of the UE_DTX_cycle_1 is the TTI length of a service or an integral multiple of the TTI length, and a service of at least one TTI can be transmitted in one transmission cycle.

Referring to FIG. 6, the length of the UE_DTX_cycle_1 is 40 ms, the length of the UE_DPCCH_burst_1 is 10 ms, a location labeled as "1" indicates a location of the transmission period UE_DPCCH_burst_1, and locations labeled as "2", "3" and "4" are non-transmission periods gap. That a TTI length of data is 10 ms is used as an example. If it is detected that data is transmitted (determined by using a TFCI) in the UE_DPCCH_burst_1 (that is, a location labeled as "1" in the first 40 ms in FIG. 6) of the first UE_DTX_cycle_1, and it may be learnt in this UE_DPCCH_burst_1 that there is still data to be transmitted in a next TTI, that is, a transmit end learns that transmission of the data is not finished in the current TTI, then, the transmit end gives one piece of instruction information in the current TTI, where the instruction information has two functions: 1) indicating that the transmit end continues to send the DPCCH and DPDCH in the next TTI (assuming that the current TTI is the first TTI, the next TTI is the second TTI, that is, a location labeled as "2" in the first 40 ms in FIG. 6), so as to finish the data transmission as soon as possible; 2) instructing a receive end to continue to receive data information in the next TTI (that is, the second TTI), so that the receive end receives the instruction information and can determine, by decoding the instruction information, whether there is data to be transmitted in the next TTI (that is, the second TTI). The instruction information may be carried in one timeslot on the DPCCH, or may be carried in one timeslot on the DPDCH channel. In addition, to ensure reliability of the instruction information, the instruction information can be repeatedly transmitted in more than one timeslot of the current TTI.

Likewise, if transmission of the DPDCH data is not finished in the second TTI, an instruction may be given in the current TTI, where the instruction information has two functions: 1) indicating that the transmit end continues to send the DPCCH and the DPDCH in the third TTI (a location labeled as "3" in the first 40 ms in FIG. 6), so as to finish the data transmission as soon as possible; 2) instructing the receive end to continue to receive data information in the third TTI, so that the receive end receives the instruction information and can determine, by decoding the instruction information, whether there is data to be transmitted in the third TTI. That is, if transmission of the data is not finished in a current TTI, an instruction is given in the current TTI. Functions of the instruction information are the same as those of the foregoing instruction information, and the two pieces of instruction information are both used to ensure correct and continuous sending and receiving of data.

Because the second TTI is within the non-transmission period gap of the transmission pattern, the second TTI becomes the current TTI when the DPDCH is transmitted in the second TTI. In this case, a current TTI may be a TTI of the transmission period UE_DPCCH_burst_1, or may be a TTI of the non-transmission period gap.

FIG. 7 is a schematic structural diagram of a dedicated channel transmission apparatus according to another embodiment of the present invention. The apparatus shown in this embodiment may be UE, is configured to implement the method described in FIG. 1, and includes a transmitting module 71 and a control module 72.

The transmitting module 71 is configured to transmit a DPDCH. The control module 72 is configured to: when a DPCCH discontinuous transmission mode of the apparatus is activated, if the DPDCH is configured and the apparatus has to-be-transmitted data, control the transmitting module 71 to start transmission of the DPDCH when a transmission period of a DPCCH starts, where the DPDCH carries the to-be-transmitted data.

Further, the control module 72 may be specifically configured to: when the DPCCH discontinuous transmission mode of the apparatus is activated according to a preset transmission pattern, if the DPDCH is configured and the apparatus has to-be-transmitted data, control the transmitting module 71 to start transmission of the DPDCH when the transmission period of the DPCCH starts, where the DPDCH carries the to-be-transmitted data.

Further, the control module 72 may be further configured to: if the apparatus does not have to-be-transmitted data, control the transmitting module 71 to discontinuously transmit the DPCCH according to the foregoing preset transmission pattern.

Further, the preset transmission pattern according to which the transmitting module 71 discontinuously transmits the DPCCH may include a data transmission section UE_DPCCH_burst_1 and a non-data transmission section gap, where

the transmitting module 71 may be specifically configured to:

transmit the DPCCH in the section UE_DPCCH_burst_1, and stop transmission of the DPCCH in the section gap.

Further, a cycle length UE_DTX_cycle_1 of the preset transmission pattern according to which the transmitting module 71 discontinuously transmits the DPCCH is a length of one subframe multiplied by an integral multiple of 5, and a length of the UE_DPCCH_burst_1 is a length of one subframe multiplied by an integral multiple of 5.

Further, in the preset transmission pattern according to which the transmitting module 71 discontinuously transmits the DPCCH, one subframe includes three timeslots, and five subframes constitute one frame.

Further, in the preset transmission pattern according to which the transmitting module discontinuously transmits the DPCCH,

a connection frame number CFN of the first frame in the UE_DPCCH_burst_1 meets the following formula:

$$(5 \times CFN - UE\_DTX\_DRX\_Offset + S) \ MOD \ UE\_DTX\_cycle\_1 = 0,$$

where

UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

Further, the control module 72 may be further configured to: if the apparatus has to-be-transmitted data, control the transmitting module 71 to transmit, in the transmission period of the DPCCH, the DPDCH that carries the to-be-transmitted data, and stop transmission of the DPDCH in a non-transmission period of the DPCCH.

Further, if the transmitting module 71 does not finish transmission of the to-be-transmitted data in the transmission period of the DPCCH, the apparatus may further include:

an instructing module, configured to transmit instruction information in a current transmission time interval TTI, where the instruction information is used to instruct to transmit the DPDCH in a next TTI of the DPCCH; where the control module 72 may be further configured to control the transmitting module to continue to transmit, in the next TTI according to the instruction information, the DPCCH and the DPDCH that carries remaining data of the to-be-transmitted data.

Further, the instructing module may be specifically configured to:

transmit, in the current TTI, the instruction information by transmitting the DPDCH that carries the instruction information;
or specifically configured to:

transmit, in the current TTI, the instruction information by transmitting the DPCCH that carries the instruction information.

Further, the instruction information transmitted by the instructing module may be carried in one timeslot, or continuously and repeatedly carried in multiple timeslots.

Further, the transmission pattern for DPCCH discontinuous transmission of the transmitting module 71 may be the same as a transmission pattern for DPCCH discontinuous transmission of a base station that activates the DPCCH discontinuous transmission mode.

FIG. 8 is a schematic structural diagram of a dedicated channel transmission apparatus according to another embodiment of the present invention. The dedicated channel transmission apparatus provided in this embodiment may be a base station, is configured to implement the method described in FIG. 2, and includes an activating module 81 and a transmitting module 82.

The activating module 81 is configured to activate a DPCCH discontinuous transmission mode. The transmitting module 82 is configured to: if a dedicated physical data channel DPDCH is configured and the apparatus has to-be-transmitted data, start transmission of the DPDCH when a transmission period of a DPCCH starts, where the DPDCH carries the to-be-transmitted data.

Further, the activating module 81 may be specifically configured to activate the DPCCH discontinuous transmission mode according to a preset transmission pattern.

Further, the transmitting module 82 may be further configured to: if the apparatus does not have to-be-transmitted data, discontinuously transmit the DPCCH according to the preset transmission pattern.

Further, the preset transmission pattern according to which the transmitting module 82 discontinuously transmits the DPCCH includes a data transmission section UE_DPCCH_burst_1 and a non-data transmission section gap, where the transmitting module 82 may be specifically configured to:

transmit the DPCCH in the section UE_DPCCH_burst_1, and stop transmission of the DPCCH in the section gap.

Further, a cycle length UE_DTX_cycle_1 of the preset transmission pattern according to which the transmitting module 82 discontinuously transmits the DPCCH is a length of one subframe multiplied by an integral multiple of 5, and a length of the UE_DPCCH_burst_1 is a length of one subframe multiplied by an integral multiple of 5.

Further, in the preset transmission pattern according to which the transmitting module 82 discontinuously transmits the DPCCH, one subframe may include three timeslots, and five sub frames constitute one frame.

Further, in the preset transmission pattern according to which the transmitting module 82 discontinuously transmits the DPCCH, a connection frame number CFN of the first frame in the UE_DPCCH_burst_1 meets the following formula:

$$(5 \times CFN\text{-}UE\_DTX\_DRX\_Offset+S) \ MOD \ UE\_DTX\_cycle\_1=0,$$

where

UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

Further, the transmitting module 82 may be further configured to: if the apparatus has to-be-transmitted data, transmit, in the transmission period of the DPCCH, the DPDCH that carries the to-be-transmitted data, and stop transmission of the DPDCH in a non-transmission period of the DPCCH.

Further, if the transmitting module 82 does not finish transmission of the to-be-transmitted data in the transmission period of the DPCCH, the apparatus may further include:

an instructing module, configured to transmit instruction information in a current transmission time interval TTI, where the instruction information is used to instruct to transmit the DPDCH in a next TTI of the DPCCH; where
the transmitting module 82 may be further configured to continue to transmit, in the next TTI according to the instruction information transmitted by the instructing module, the DPCCH and the DPDCH that carries remaining data of the to-be-transmitted data.

Further, the instructing module is specifically configured to:

transmit, in the current TTI, the instruction information by transmitting the DPDCH that carries the instruction information;
or specifically configured to:

transmit, in the current TTI, the instruction information by transmitting the DPCCH that carries the instruction information.

Further, the instruction information transmitted by the instructing module is carried in one timeslot, or continuously and repeatedly carried in multiple timeslots.

Further, the transmission pattern for DPCCH discontinuous transmission of the transmitting module 82 may be the same as a transmission pattern of user equipment UE that receives the DPDCH.

Further, the transmitting module 82 may be specifically configured to activate the DPCCH discontinuous transmission mode according to a transmission pattern set by a radio network controller.

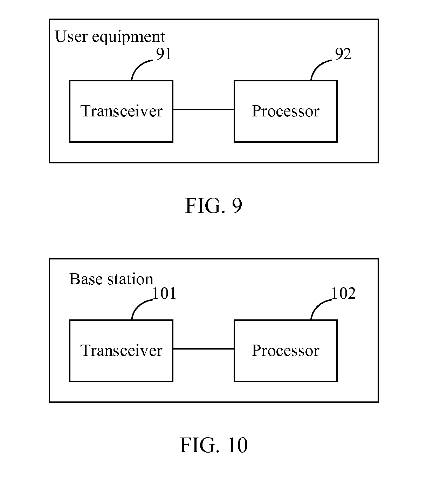

FIG. 9 is a schematic structural diagram of user equipment according to another embodiment of the present invention. The user equipment shown in this embodiment includes a transceiver 91 and a processor 92, which are configured to execute the foregoing dedicated channel transmission method described in FIG. 1.

The transceiver 91 is configured to transmit a DPDCH. The processor 92 is configured to: when a dedicated physical control channel DPCCH discontinuous transmission mode of the user equipment is activated, if the DPDCH is configured and the apparatus has to-be-transmitted data, control the transmitting module to start transmission of the DPDCH when a transmission period of a DPCCH starts, where the DPDCH carries the to-be-transmitted data.

The processor 92 is specifically configured to: when the DPCCH discontinuous transmission mode of the user equipment is activated according to a preset transmission pattern, if the DPDCH is configured and the user equipment has to-be-transmitted data, control the transceiver 91 to start transmission of the DPDCH when the transmission period of the DPCCH starts, where the DPDCH carries the to-be-transmitted data.

Further, the processor 92 is further configured to: if the user equipment does not have to-be-transmitted data, control the transceiver 91 to discontinuously transmit, according to the preset transmission pattern, the DPCCH.

Further, the preset transmission pattern according to which the transceiver 91 discontinuously transmits the DPCCH includes a data transmission section UE_DPCCH_burst_1 and a non-data transmission section gap, where the transceiver 91 is specifically configured to:

transmit the DPCCH in the section UE_DPCCH_burst_1, and stop transmission of the DPCCH in the section gap.

Further, a cycle length UE_DTX_cycle_1 of the preset transmission pattern according to which the transceiver 91 discontinuously transmits the DPCCH is a length of one subframe multiplied by an integral multiple of 5, and a length of the UE_DPCCH_burst_1 is a length of one subframe multiplied by an integral multiple of 5.

Further, in the preset transmission pattern according to which the transceiver 91 discontinuously transmits the DPCCH, one subframe includes three timeslots, and five subframes constitute one frame.

Further, in the preset transmission pattern according to which the transceiver 91 discontinuously transmits the DPCCH,
a connection frame number CFN of the first frame in the UE_DPCCH_burst_1 meets the following formula:

$$(5 \times CFN-UE\_DTX\_DRX\_Offset+S) \; MOD \; UE\_DTX\_cycle\_1=0,$$

where

UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

Further, the processor 92 is further configured to: if the user equipment has to-be-transmitted data, control the transceiver 91 to transmit, in the transmission period of the DPCCH, the DPDCH that carries the to-be-transmitted data, and stop transmission of the DPDCH in a non-transmission period of the DPCCH.

Further, if the transceiver 91 does not finish transmission of the to-be-transmitted data in the transmission period of the DPCCH,

the transceiver 91 may be further configured to transmit instruction information in a current transmission time interval TTI, where the instruction information is used to instruct to transmit the DPDCH in a next TTI of the DPCCH; and

the processor 92 may be further configured to control, according to the instruction information, the transceiver 91 to continue to transmit, in the next TTI, the DPCCH and the DPDCH that carries remaining data of the to-be-transmitted data.

Further, the transceiver 91 may be specifically configured to:

transmit, in the current TTI, the instruction information by transmitting the DPDCH that carries the instruction information;

or specifically configured to:

transmit, in the current TTI, the instruction information by transmitting the DPCCH that carries the instruction information.

Further, the instruction information transmitted by the transceiver 91 is carried in one timeslot, or continuously and repeatedly carried in multiple timeslots.

Further, the transmission pattern for DPCCH discontinuous transmission of the transceiver 91 is the same as a transmission pattern for DPCCH discontinuous transmission of a base station that activates the DPCCH discontinuous transmission mode.

FIG. 10 is a schematic structural diagram of a base station according to another embodiment of the present invention. The base station shown in this embodiment includes a transceiver 101 and a processor 102, which are configured to execute the foregoing dedicated channel transmission method described in FIG. 2. The processor 102 is configured to activate a DPCCH discontinuous transmission mode. The transceiver 101 is configured to: if a DPDCH is configured and the base station has to-be-transmitted data, start transmission of the DPDCH in a transmission period of a DPCCH, where the DPDCH carries the to-be-transmitted data.

Further, the processor 102 may be specifically configured to activate the DPCCH discontinuous transmission mode according to a preset transmission pattern.

Further, the transceiver 101 may be further configured to: if the base station does not have to-be-transmitted data, discontinuously transmit the DPCCH according to the preset transmission pattern.

Further, the preset transmission pattern according to which the transceiver 101 discontinuously transmits the DPCCH may include a data transmission section UE_DPCCH_burst_1 and a non-data transmission section gap, where the transceiver 101 may be specifically configured to:

transmit the DPCCH in the section UE_DPCCH_burst_1, and stop transmission of the DPCCH in the section gap.

Further, a cycle length UE_DTX_cycle_1 of the preset transmission pattern according to which the transceiver 101 discontinuously transmits the DPCCH is a length of one subframe multiplied by an integral multiple of 5, and a length of the UE_DPCCH_burst_1 is a length of one subframe multiplied by an integral multiple of 5.

Further, in the preset transmission pattern according to which the transceiver 101 discontinuously transmits the DPCCH, one subframe may include three timeslots, and five subframes constitute one frame.

Further, in the preset transmission pattern according to which the transceiver 101 discontinuously transmits the DPCCH, a connection frame number CFN of the first frame in the UE_DPCCH_burst_1 meets the following formula:

$$(5 \times CFN - UE\_DTX\_DRX\_Offset + S) \ MOD \ UE\_DTX\_cycle\_1 = 0,$$

where

UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

Further, the transceiver 101 is further configured to: if the base station has to-be-transmitted data, transmit, in the transmission period of the DPCCH, the DPDCH that carries the to-be-transmitted data, and stop transmission of the DPDCH in a non-transmission period of the DPCCH.

Further, if the transceiver 101 does not finish transmission of the to-be-transmitted data in the transmission period of the DPCCH,

the transceiver 101 is further configured to transmit instruction information in a current transmission time interval TTI, where the instruction information is used to instruct to transmit the DPDCH in a next TTI of the DPCCH; and

the transceiver 101 is further configured to continue to transmit, in the next TTI according to the instruction information transmitted by the instructing module, the DPCCH and the DPDCH that carries remaining data of the to-be-transmitted data.

Further, the transceiver 101 may be specifically configured to:

transmit, in the current TTI, the instruction information by transmitting the DPDCH that carries the instruction information;

or specifically configured to:

transmit, in the current TTI, the instruction information by transmitting the DPCCH that carries the instruction information.

Further, the instruction information transmitted by the transceiver 101 is carried in one timeslot, or continuously and repeatedly carried in multiple timeslots.

Further, the transmission pattern for DPCCH discontinuous transmission of the transceiver 101 is the same as a transmission pattern of user equipment UE that receives the DPDCH.

Further, the transceiver 101 may be specifically configured to activate the DPCCH discontinuous transmission mode according to a transmission pattern set by a radio network controller.

An embodiment of the present invention further provides a computer program product, where the computer program product includes a computer-readable medium, and the readable medium includes a first set of program code that is used to execute the step in the foregoing method described in FIG. 1:

When a dedicated physical control channel DPCCH discontinuous transmission mode of user equipment UE is activated, if a dedicated physical data channel DPDCH is configured and the UE has to-be-transmitted data, the UE starts transmission of the DPDCH when a transmission period of a DPCCH starts, where the DPDCH carries the to-be-transmitted data.

Further, that when a DPCCH discontinuous transmission mode of user equipment UE is activated includes that: when the DPCCH discontinuous transmission mode of the UE is activated according to a preset transmission pattern.

Further, if the user equipment UE does not have to-be-transmitted data, the UE discontinuously transmits the DPCCH according to the preset transmission pattern.

Further, the preset transmission pattern includes a data transmission section UE_DPCCH_burst_1 and a non-data transmission section gap; and that the UE discontinuously transmits the DPCCH according to the preset transmission pattern includes that:

the UE transmits the DPCCH in the section UE_DPCCH_burst_1, and stops transmission of the DPCCH in the section gap.

Further, a cycle length UE_DTX_cycle_1 of the preset transmission pattern is a length of one subframe multiplied by an integral multiple of 5, and a length of the UE_DPCCH_burst_1 is a length of one subframe multiplied by an integral multiple of 5.

Further, one subframe includes three timeslots, and five subframes constitute one frame.

Further, a connection frame number CFN of the first frame in the UE_DPCCH_burst_1 meets the following formula:

$$(5 \times CFN-UE\_DTX\_DRX\_Offset+S) \ MOD \ UE\_DTX\_cycle\_1=0,$$

where

UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

Further, if the UE has to-be-transmitted data, the UE transmits, in the transmission period of the DPCCH, the DPDCH that carries the to-be-transmitted data, and stops transmission of the DPDCH in a non-transmission period of the DPCCH.

Further, if the UE does not finish transmission of the to-be-transmitted data in the transmission period of the DPCCH, the method further includes:

transmitting, by the UE, instruction information in a current transmission time interval TTI, where the instruction information is used to instruct to transmit the DPDCH in a next TTI of the DPCCH; and

continuing to transmit, by the UE in the next TTI according to the instruction information, the DPCCH and the DPDCH that carries remaining data of the to-be-transmitted data.

Further, the transmitting, by the UE, instruction information in a current TTI includes:

transmitting, by the UE in the current TTI, the instruction information by transmitting the DPDCH that carries the instruction information;

or includes:

transmitting, by the UE in the current TTI, the instruction information by transmitting the DPCCH that carries the instruction information.

Further, the instruction information is carried in one timeslot, or continuously and repeatedly carried in multiple timeslots.

Further, the transmission pattern for DPCCH discontinuous transmission of the UE is the same as a transmission pattern of a base station that activates the DPCCH discontinuous transmission mode.

In addition, an embodiment of the present invention further provides another computer program product, where the computer program product includes a computer-readable medium, and the readable medium includes a second set of program code that is used to execute the steps in the foregoing method described in FIG. 2:

A base station activates a dedicated physical control channel DPCCH discontinuous transmission mode; and if a dedicated physical data channel DPDCH is configured and the base station has to-be-transmitted data, the base station starts transmission of the DPDCH when a transmission period of a DPCCH starts, where the DPDCH carries the to-be-transmitted data.

Further, that a base station activates a dedicated physical control channel DPCCH discontinuous transmission mode includes that: the base station activates the DPCCH discontinuous transmission mode according to a preset transmission pattern.

Further, if the base station does not have to-be-transmitted data, the base station discontinuously transmits the DPCCH according to the preset transmission pattern.

Further, the preset transmission pattern includes a data transmission section UE_DPCCH_burst_1 and a non-data transmission section gap; and that the base station discontinuously transmits the DPCCH according to the preset transmission pattern includes that:

the base station transmits the DPCCH in the section UE_DPCCH_burst_1, and stops transmission of the DPCCH in the section gap.

Further, a cycle length UE_DTX_cycle_1 of the preset transmission pattern is a length of one subframe multiplied by an integral multiple of 5, and a length of the UE_DPCCH_burst_1 is a length of one subframe multiplied by an integral multiple of 5.

Further, one subframe includes three timeslots, and five subframes constitute one frame.

Further, a connection frame number CFN of the first frame in the UE_DPCCH_burst_1 meets the following formula:

$$(5 \times CFN\text{-}UE\_DTX\_DRX\_Offset+S) \ MOD \ UE\_DTX\_cycle\_1=0,$$

where

UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

Further, if the base station has to-be-transmitted data, the base station transmits, in the transmission period of the DPCCH, the DPDCH that carries the to-be-transmitted data, and stops transmission of the DPDCH in a non-transmission period of the DPCCH.

Further, if the base station does not finish transmission of the to-be-transmitted data in the transmission period of the DPCCH, the method further includes:

transmitting, by the base station, instruction information in a current transmission time interval TTI, where the instruction information is used to instruct to transmit the DPDCH in a next TTI of the DPCCH; and
continuing to transmit, by the base station in the next TTI according to the instruction information, the DPCCH and the DPDCH that carries remaining data of the to-be-transmitted data.

Further, the transmitting, by the base station, instruction information in a current TTI includes:

transmitting, by the base station in the current TTI, the instruction information by transmitting the DPDCH that carries the instruction information;
or includes:

transmitting, by the base station in the current TTI, the instruction information by transmitting the DPCCH that carries the instruction information.

Further, the instruction information is carried in one timeslot, or continuously and repeatedly carried in multiple timeslots.

Further, the transmission pattern for DPCCH discontinuous transmission of the base station is the same as a transmission pattern of user equipment UE that receives the DPDCH.

Further, that a base station activates a dedicated physical control channel DPCCH discontinuous transmission mode may include that: the base station activates the DPCCH discontinuous transmission mode according to a transmission pattern set by a radio network controller.

A person of ordinary skill in the art may understand that all or a part of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1. A dedicated channel transmission method, comprising:

when a dedicated physical control channel DPCCH discontinuous transmission mode of user equipment UE is activated, if a dedicated physical data channel DPDCH is configured and the UE has to-be-transmitted data, starting, by the UE, transmission of the DPDCH when a transmission period of a DPCCH starts, wherein the DPDCH carries the to-be-transmitted data.

2. The method according to claim 1, wherein that when a dedicated physical control channel DPCCH discontinuous transmission mode of user equipment UE is activated comprises that: when the DPCCH discontinuous transmission mode of the UE is activated according to a preset transmission pattern.

3. The method according to claim 2, if the user equipment UE does not have to-be-transmitted data, discontinuously transmitting, by the UE, the DPCCH according to the preset transmission pattern.

4. The method according to claim 3, wherein the preset transmission pattern comprises a data transmission section

UE_DPCCH_burst_1 and a non-data transmission section gap; and the discontinuously transmitting, by the UE, the DPCCH according to the preset transmission pattern comprises:

transmitting, by the UE, the DPCCH in the section UE_DPCCH_burst_1, and stopping transmission of the DPCCH in the section gap.

5. The method according to claim 4, wherein:

a cycle length UE_DTX_cycle_1 of the preset transmission pattern is a length of one subframe multiplied by an integral multiple of 5, and a length of the UE_DPCCH_burst_1 is a length of one subframe multiplied by an integral multiple of 5.

6. The method according to claim 5, wherein one subframe comprises three timeslots, and five subframes constitute one frame.

7. The method according to claim 5, wherein:

a connection frame number CFN of the first frame in the UE_DPCCH_burst_1 meets the following formula:

$$(5 \times CFN - UE\_DTX\_DRX\_Offset + S) \bmod UE\_DTX\_cycle\_1 = 0,$$

wherein
UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

8. The method according to any one of claims 1 to 7, if the UE has to-be-transmitted data, transmitting, by the UE in the transmission period of the DPCCH, the DPDCH that carries the to-be-transmitted data, and stopping transmission of the DPDCH in a non-transmission period of the DPCCH.

9. The method according to any one of claims 1 to 8, wherein if the UE does not finish transmission of the to-be-transmitted data in the transmission period of the DPCCH, the method further comprises:

transmitting, by the UE, instruction information in a current transmission time interval TTI, wherein the instruction information is used to instruct to transmit the DPDCH in a next TTI of the DPCCH; and
continuing to transmit, by the UE in the next TTI according to the instruction information, the DPCCH and the DPDCH that carries remaining data of the to-be-transmitted data.

10. The method according to claim 9, wherein the transmitting, by the UE, instruction information in a current TTI comprises:

transmitting, by the UE in the current TTI, the instruction information by transmitting the DPDCH that carries the instruction information;
or comprises:

transmitting, by the UE in the current TTI, the instruction information by transmitting the DPCCH that carries the instruction information.

11. The method according to claim 10, wherein the instruction information is carried in one timeslot, or continuously and repeatedly carried in multiple timeslots.

12. The method according to any one of claims 1 to 11, wherein the transmission pattern for DPCCH discontinuous transmission of the UE is the same as a transmission pattern for DPCCH discontinuous transmission of a base station that activates the DPCCH discontinuous transmission mode.

13. A dedicated channel transmission method, comprising:

activating, by a base station, a dedicated physical control channel DPCCH discontinuous transmission mode; and
if a dedicated physical data channel DPDCH is configured and the base station has to-be-transmitted data, starting, by the base station, transmission of the DPDCH when a transmission period of a DPCCH starts, wherein the DPDCH carries the to-be-transmitted data.

14. The method according to claim 13, wherein the activating, by a base station, a dedicated physical control channel DPCCH discontinuous transmission mode comprises:

activating, by the base station, the DPCCH discontinuous transmission mode according to a preset transmission pattern.

15. The method according to claim 14, if the base station does not have to-be-transmitted data, discontinuously transmitting, by the base station, the DPCCH according to the preset transmission pattern.

16. The method according to claim 15, wherein the preset transmission pattern comprises a data transmission section UE_DPCCH_burst_1 and a non-data transmission section gap; and the discontinuously transmitting, by the base station, the DPCCH according to the preset transmission pattern comprises:

transmitting, by the base station, the DPCCH in the section UE_DPCCH_burst_1, and stopping transmission of the DPCCH in the section gap.

17. The method according to claim 15, wherein:

a cycle length UE_DTX_cycle_1 of the preset transmission pattern is a length of one subframe multiplied by an integral multiple of 5, and a length of the UE_DPCCH_burst_1 is a length of one subframe multiplied by an integral multiple of 5.

18. The method according to claim 17, wherein one subframe comprises three timeslots, and five sub frames constitute one frame.

19. The method according to claim 17, wherein
a connection frame number CFN of the first frame in the UE_DPCCH_burst_1 meets the following formula:

$$(5 \times CFN - UE\_DTX\_DRX\_Offset + S) \ MOD \ UE\_DTX\_cycle\_1 = 0,$$

wherein
UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

20. The method according to any one of claims 13 to 19, if the base station has to-be-transmitted data, transmitting, by the base station in the transmission period of the DPCCH, the DPDCH that carries the to-be-transmitted data, and stopping transmission of the DPDCH in a non-transmission period of the DPCCH.

21. The method according to any one of claims 13 to 20, wherein if the base station does not finish transmission of the to-be-transmitted data in the transmission period of the DPCCH, the method further comprises:

transmitting, by the base station, instruction information in a current transmission time interval TTI, wherein the instruction information is used to instruct to transmit the DPDCH in a next TTI of the DPCCH; and
continuing to transmit, by the base station in the next TTI according to the instruction information, the DPCCH and the DPDCH that carries remaining data of the to-be-transmitted data.

22. The method according to claim 21, wherein the transmitting, by the base station, instruction information in a current TTI comprises:

transmitting, by the base station in the current TTI, the instruction information by transmitting the DPDCH that carries the instruction information;
or comprises:

transmitting, by the base station in the current TTI, the instruction information by transmitting the DPCCH that carries the instruction information.

23. The method according to claim 22, wherein the instruction information is carried in one timeslot, or continuously and repeatedly carried in multiple timeslots.

24. The method according to any one of claims 13 to 23, wherein the transmission pattern for DPCCH discontinuous transmission of the base station is the same as a transmission pattern of user equipment UE that receives the DPDCH.

25. The method according to any one of claims 14 to 24, wherein the activating, by a base station, a dedicated physical control channel DPCCH discontinuous transmission mode comprises: activating, by the base station, the DPCCH discontinuous transmission mode according to a transmission pattern set by a radio network controller.

26. A dedicated channel transmission apparatus, comprising:

a transmitting module, configured to transmit a dedicated physical data channel DPDCH; and
a control module, configured to: when a dedicated physical control channel DPCCH discontinuous transmission mode of the apparatus is activated, if the DPDCH is configured and the apparatus has to-be-transmitted data, control the transmitting module to start transmission of the DPDCH when a transmission period of a DPCCH starts, wherein the DPDCH carries the to-be-transmitted data.

27. The apparatus according to claim 26, wherein the control module is specifically configured to: when the DPCCH discontinuous transmission mode of the apparatus is activated according to a preset transmission pattern, if the DPDCH is configured and the apparatus has to-be-transmitted data, control the transmitting module to start transmission of the DPDCH when the transmission period of the DPCCH starts, wherein the DPDCH carries the to-be-transmitted data.

28. The apparatus according to claim 27, wherein the control module is further configured to: if the apparatus does not have to-be-transmitted data, control the transmitting module to discontinuously transmit, according to the preset transmission pattern, the DPCCH.

29. The apparatus according to claim 28, wherein the preset transmission pattern, according to which the transmitting module discontinuously transmits the DPCCH comprises a data transmission section UE_DPCCH_burst_1 and a non-data transmission section gap; wherein
the transmitting module is specifically configured to:

transmit the DPCCH in the section UE_DPCCH_burst_1, and stop transmission of the DPCCH in the section gap.

30. The apparatus according to claim 29, wherein:

a cycle length UE_DTX_cycle_1 of the preset transmission pattern according to which the transmitting module discontinuously transmits the DPCCH is a length of one subframe multiplied by an integral multiple of 5, and a length of the UE_DPCCH_burst_1 is a length of one subframe multiplied by an integral multiple of 5.

31. The apparatus according to claim 30, wherein: in the preset transmission pattern according to which the transmitting module discontinuously transmits the DPCCH, one subframe comprises three timeslots, and five subframes constitute one frame.

32. The apparatus according to claim 30, wherein: in the preset transmission pattern according to which the transmitting module discontinuously transmits the DPCCH,
a connection frame number CFN of the first frame in the UE_DPCCH_burst_1 meets the following formula:

$$(5 \times CFN - UE\_DTX\_DRX\_Offset + S) \ MOD \ UE\_DTX\_cycle\_1 = 0,$$

wherein
UE_DTX_DRX_Offset is a quantity of offset subframes between an uplink DPCCH transmission pattern and a high speed shared control channel HS-SCCH reception pattern, and the quantity of the offset subframes is an integral multiple of 5; and S is a subframe number of the DPCCH.

33. The apparatus according to any one of claims 26 to 32, wherein the control module is further configured to: if the apparatus has to-be-transmitted data, control the transmitting module to transmit, in the transmission period of the DPCCH, the DPDCH that carries the to-be-transmitted data, and stop transmission of the DPDCH in a non-transmission period of the DPCCH.

34. The apparatus according to any one of claims 26 to 33, wherein if the transmitting module does not finish transmission of the to-be-transmitted data in the transmission period of the DPCCH, the apparatus further comprises:

   an instructing module, configured to transmit instruction information in a current transmission time interval TTI, wherein the instruction information is used to instruct to transmit the DPDCH in a next TTI of the DPCCH; wherein the control module is further configured to control, according to the instruction information, the transmitting module to continue to transmit, in the next TTI, the DPCCH and the DPDCH that carries remaining data of the to-be-transmitted data.

35. The apparatus according to claim 34, wherein the instructing module is specifically configured to:

   transmit, in the current TTI, the instruction information by transmitting the DPDCH that carries the instruction information;
   or specifically configured to:

      transmit, in the current TTI, the instruction information by transmitting the DPCCH that carries the instruction information.

36. The apparatus according to claim 35, wherein the instruction information transmitted by the instructing module is carried in one timeslot, or continuously and repeatedly carried in multiple timeslots.

37. The apparatus according to any one of claims 26 to 36, wherein the transmission pattern for DPCCH discontinuous transmission of the transmitting module is the same as a transmission pattern for DPCCH discontinuous transmission of a base station that activates the DPCCH discontinuous transmission mode.

38. A dedicated channel transmission apparatus, comprising:

   an activating module, configured to activate a dedicated physical control channel DPCCH discontinuous transmission mode; and
   a transmitting module, configured to: if a dedicated physical data channel DPDCH is configured and the apparatus has to-be-transmitted data, start transmission of the DPDCH when a transmission period of a DPCCH starts, wherein the DPDCH carries the to-be-transmitted data.

39. The apparatus according to claim 38, wherein the activating module is specifically configured to activate the DPCCH discontinuous transmission mode according to a preset transmission pattern.

40. The apparatus according to claim 39, wherein the transmitting module is further configured to: if the apparatus does not have to-be-transmitted data, discontinuously transmit the DPCCH according to the preset transmission pattern.

41. The apparatus according to claim 40, wherein the preset transmission pattern according to which the transmitting module discontinuously transmits the DPCCH comprises a data transmission section UE_DPCCH_burst_1 and a non-data transmission section gap; and the transmitting module is specifically configured to:

   transmit the DPCCH in the section UE_DPCCH_burst_1, and stop transmission of the DPCCH in the section gap.

42. The apparatus according to claim 40, wherein:

   a cycle length UE_DTX_cycle_1 of the preset transmission pattern according to which the transmitting module discontinuously transmits the DPCCH is a length of one subframe multiplied by an integral multiple of 5, and a length of the UE_DPCCH_burst_1 is a length of one subframe multiplied by an integral multiple of 5.

43. The apparatus according to claim 42, wherein: in the preset transmission pattern according to which the transmitting module discontinuously transmits the DPCCH, one subframe comprises three timeslots, and five subframes constitute one frame.

44. The apparatus according to claim 42, wherein:

in the preset transmission pattern according to which the transmitting module discontinuously transmits the DPCCH, a connection frame number CFN of the first frame in the UE_DPCCH_burst_1 meets the following formula:

$$(5 \times CFN - UE\_DTX\_DRX\_Offset + S)\ MOD\ UE\_DTX\_cycle\_1 = 0,$$

wherein
UE_DTX_DRX_Offset is a quantity of offset subframes between a downlink DPCCH transmission pattern and a high speed shared control channel HS-SCCH reception pattern, and the quantity of the offset subframes is an integral multiple of 5; and S is a subframe number of the DPCCH.

45. The apparatus according to any one of claims 38 to 44, wherein the transmitting module is further configured to: if the apparatus has to-be-transmitted data, transmit, in the transmission period of the DPCCH, the DPDCH that carries the to-be-transmitted data, and stop transmission of the DPDCH in a non-transmission period of the DPCCH.

46. The apparatus according to any one of claims 38 to 45, wherein if the transmitting module does not finish transmission of the to-be-transmitted data in the transmission period of the DPCCH, the apparatus further comprises:

an instructing module, configured to transmit instruction information in a current transmission time interval TTI, wherein the instruction information is used to instruct to transmit the DPDCH in a next TTI of the DPCCH; wherein the transmitting module is further configured to continue to transmit, in the next TTI according to the instruction information transmitted by the instructing module, the DPCCH and the DPDCH that carries remaining data of the to-be-transmitted data.

47. The apparatus according to claim 46, wherein the instructing module is specifically configured to:

transmit, in the current TTI, the instruction information by transmitting the DPDCH that carries the instruction information;
or specifically configured to:

transmit, in the current TTI, the instruction information by transmitting the DPCCH that carries the instruction information.

48. The apparatus according to claim 47, wherein the instruction information transmitted by the instructing module is carried in one timeslot, or continuously and repeatedly carried in multiple timeslots.

49. The apparatus according to any one of claims 38 to 48, wherein the transmission pattern for DPCCH discontinuous transmission of the transmitting module is the same as a transmission pattern of user equipment UE that receives the DPDCH.

50. The apparatus according to any one of claims 39 to 49, wherein the transmitting module is specifically configured to activate the DPCCH discontinuous transmission mode according to a transmission pattern set by a radio network controller.

51. A computer program product, comprising a computer-readable medium, wherein the readable medium comprises a set of program code that is used to execute the dedicated channel transmission method according to any one of claims 1 to 25.

When a DPCCH discontinuous transmission mode of UE is activated, if a DPDCH is configured and the UE has to-be-transmitted data, the UE starts transmission of the DPDCH when a transmission period of a DPCCH starts, where the DPDCH carries the to-be-transmitted data ⌐ 11

FIG. 1

A base station activates a DPCCH discontinuous transmission mode ⌐ 21

If a DPDCH is configured and the foregoing base station has to-be-transmitted data, the base station starts transmission of the DPDCH when a transmission period of a DPCCH starts, where the DPDCH carries the foregoing to-be-transmitted data ⌐ 22

FIG. 2

Uplink DPCCH

Downlink DPCCH

40ms 40ms 40ms

FIG. 3

Uplink DPDCH

Uplink DPCCH

40ms 40ms 40ms

FIG. 4

FIG. 5

FIG. 6

FIG. 7

FIG. 8

User equipment

Transceiver ——— Processor

91  92

FIG. 9

Base station

Transceiver ——— Processor

101  102

FIG. 10

# INTERNATIONAL SEARCH REPORT

| | |
|---|---|
| International application No. | |
| | **PCT/CN2013/073634** |

## A. CLASSIFICATION OF SUBJECT MATTER

H04W 16/10 (2011.01) i

According to International Patent Classification (IPC) or to both national classification and IPC

## B. FIELDS SEARCHED

Minimum documentation searched (classification system followed by classification symbols)

IPC: H04W, H04B

Documentation searched other than minimum documentation to the extent that such documents are included in the fields searched

Electronic data base consulted during the international search (name of data base and, where practicable, search terms used)

CNABS, DWPI: dedicated channel, discontinuous transmission, DPCCH, burst, gap, DPDDH, discontinuous, DTX, DRX

## C. DOCUMENTS CONSIDERED TO BE RELEVANT

| Category* | Citation of document, with indication, where appropriate, of the relevant passages | Relevant to claim No. |
|---|---|---|
| X | WO 2010124452 A1 (SHENZHEN HUAWEI COMMUNICATION TECHNOLOGIES CO., LTD.), 04 November 2010 (04.11.2010), description, page 1, line 6 to page 2, line 12, and page 7, the last line to page 9, line 6, and figure 3 | 1-6, 8-18, 20-31, 33-43, 45-51 |
| Y | The same as above | 7, 19, 32, 45 |
| Y | CN 101179825 A (HUAWEI TECHNOLOGIES CO., LTD.), 14 May 2008 (14.05.2008), description, page 9, line 3, to page 11, line 1 | 7, 19, 32, 45 |
| A | CN 101686491 A (HUAWEI TECHNOLOGIES CO., LTD.), 31 March 2010 (31.03.2010), the whole document | 1-51 |
| A | CN 101030809 A (HUAWEI TECHNOLOGIES CO., LTD.), 05 September 2007 (05.09.2007), the whole document | 1-51 |
| A | CN 101425835 A (HUAWEI TECHNOLOGIES CO., LTD.), 06 May 2009 (06.05.2009), the whole document | 1-51 |

☐ Further documents are listed in the continuation of Box C.    ☒ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 09 December 2013 (09.12.2013) | **02 January 2014 (02.01.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SU, Yulei** Telephone No.: (86-10) **62411515** |
|---|---|

Form PCT/ISA/210 (second sheet) (July 2009)

## INTERNATIONAL SEARCH REPORT
### Information on patent family members

International application No.

**PCT/CN2013/073634**

| Patent Documents referred in the Report | Publication Date | Patent Family | Publication Date |
|---|---|---|---|
| WO 2010124452 A1 | 04.11.2010 | CN 102187703 A | 14.09.2011 |
| CN 101179825 A | 14.05.2008 | CN 101132543 B | 27.10.2010 |
|  |  | CN 101132543 A | 27.02.2008 |
|  |  | CN 101179825 B | 29.09.2010 |
|  |  | WO 2008025284 A1 | 06.03.2008 |
| CN 101686491 A | 31.03.2010 | WO 2010031323 A1 | 25.03.2010 |
|  |  | CN 101686491 B | 03.10.2012 |
| CN 101030809 A | 05.09.2007 | CN 101030809 B | 13.04.2011 |
| CN 101425835 A | 06.05.2009 | CN 101425835 B | 21.11.2012 |

Form PCT/ISA/210 (patent family annex) (July 2009)